# EUROPÄISCHE PATENTSCHRIFT

(11) **EP 2 979 805 B1**
(45) Veröffentlichungstag und Bekanntmachung des Hinweises auf die Patenterteilung: **30.08.2017**
(21) Anmeldenummer: 15002177.2
(22) Anmeldetag: 23.07.2015
(51) Int. Cl.: B65D 59/06, B23K 9/32, B23K 37/00, B23K 37/06, F16L 55/115

(54) **SCHUTZVORRICHTUNG FÜR EINEN LÄNGLICHEN HOHLKÖRPER MIT ZWEI HALBSCHALEN UND EINER KAPPE ; VERFAHREN ZUM ANBRINGEN EINER SOLCHEN SCHUTZVORRICHTUNG AN EINEM LÄNGLICHEN HOHLKÖRPER**
PROTECTION DEVICE FOR AN ELONGATED HOLLOW BODY WITH TWO HALVES SHELVES AND A COVER ; METHOD OF INSTALLING SUCH PROTECTION DEVICE ON AN ELONGATED HOLLOW BODY
DISPOSITIF DE PROTECTION POUR UN CORPS CREUX LONGITUDINAL AVEC DEUX DEMI COQUES ET UN CHAPEAU ; METHODE DE POSE D'UN TEL DISPOSITIF DE PROTECTION SUR UN CORPS CREUX

(30) Priorität: 30.07.2014 DE 102014011082
(43) Veröffentlichungstag der Anmeldung: 03.02.2016
(73) Patentinhaber: Airbus DS GmbH, 82024 Taufkirchen (DE)
(72) Erfinder: Bauer, Klaus, 74172 Neckarsulm (DE)
(74) Vertreter: Schicker, Silvia

(56) Entgegenhaltungen:
- EP-A2- 0 297 493
- DE-C- 163 744
- FR-A1- 2 991 432
- US-A1- 2002 180 214

## Beschreibung

Die Erfindung betrifft eine Schutzvorrichtung für einen länglichen Hohlkörper, insbesondere ein zylindrisches Rohr gemäß dem Oberbegriff des Anspruchs 1 (siehe, z.B., DE163 744 C). Die Erfindung betrifft ferner ein Verfahren zum Anbringen einer solchen Schutzvorrichtung an einem länglichen Hohlkörper. Im Umfeld der Herstellung und Integration von Raumfahrtkomponenten besteht das Bedürfnis, längliche Hohlkörper, wie z.B. zylindrische Rohre, im Rahmen von Teilbearbeitungsschritten vor Beschädigung und Verschmutzung zu schützen. Dies gilt insbesondere für deren Enden oder Anschlüsse, welche z.B. für einen nachfolgenden Schweißprozess innen und außen vor Schmutz und Beschädigung geschützt werden müssen.
Hierzu ist es bekannt, an dem Ende oder Anschluss des Hohlkörpers Klebefolien, wie z.B. ein Kapton-Tape, anzubringen. Beim Entfernen der Klebefolie verbleiben jedoch Kleberückstände, so dass ungünstige Konditionen für einen nachfolgenden Verarbeitungsschritt, wie z.B. einen Schweißvorgang, vorliegen. Es kann daher erforderlich sein, das Ende oder den Anschluss des Hohlkörpers nach dem Entfernen der Klebefolie in einem separaten Schritt zu reinigen. Ein weiterer Nachteil besteht darin, dass sich Klebefolien ganz oder teilweise von dem Ende des Hohlkörpers ablösen können, so dass kein vollständiger mechanischer Schutz gegeben ist, um die Kanten am Ende des Hohlkörpers gegen Stöße oder sonstige Einwirkungen zu schützen.
Alternativ werden Schrumpfschläuche zum Schutz des Endes oder Anschlusses des Hohlkörpers eingesetzt. Schrumpfschläuche generieren jedoch sowohl beim Aufbringen als auch beim Abziehen Partikel, welche vor einem nachfolgenden Verarbeitungsschritt, wie z.B. einem Schweißvorgang, entfernt werden müssen. Auch kann sich ein Schrumpfschlauch ganz oder teilweise ablösen und bietet somit keinen mechanischen Schutz, um die Kanten am Ende des Hohlkörpers gegen Stöße oder andere Einwirkungen zu schützen.

Die Verwendung sog. Norm-Verschraubungen (wie z.B. Swagelok) ermöglicht eine zerstörungsfreie Ablösung vom Ende des Hohlkörpers. Beim Aufbringen und/oder Abziehen der Norm-Verschraubung können aufgrund der metallischen Verbindung jedoch Partikel generiert werden. Diese sind vor einem weiteren Verarbeitungsschritt in einem separaten Reinigungsvorgang zu entfernen. Der konstruktive Aufbau einer Norm-Verschraubung kann auch zu einem Einschneiden oder Oberflächenspuren, wie Riefen oder Kratzer, führen, so dass keine optimale Weiterverarbeitungsbedingungen vorliegen. Ein weiterer Nachteil von Norm-Verschraubungen besteht darin, dass aufgrund des hohen Gewichts der Verschraubung Lasten auf das Hohlkörperende beim Transport, beispielsweise auf-grund von Vibrationen, auftreten können. Ebenso besteht die Gefahr eines Quetschens oder der Verformung des Hohlkörpers beim Aufbringen der Verschraubung.

Die DE 163 744 C offenbart eine Vorrichtung zum Schutz von Zapfen einer Radachse gegen Beschädigungen beim Transport. Die zu schützenden Zapfen weisen einen zylindrischen Endabschnitt auf, wobei angrenzend an diesen die Zapfen mit einer umlaufenden Nut versehen sind. Die Vorrichtung umfasst zwei in Halbkreisform gebogene Schalen, die so geformt sind, dass diese in einem an dem Zapfen angebrachten Zustand die Nut vollständig ausfüllen. Eine an einem Ende geschlossene Hülse ist dafür vorgesehen, über den zylindrischen Endabschnitt und die in der Nut angebrachten Schalen geschoben zu werden.

Die EP 0 297 493 A2 betrifft eine Schutzvorrichtung für Rohrenden. Ein aus zwei Schalenhälften bestehender Einsatz der Schutzvorrichtung ist dafür vorgesehen, an einem Rohrende derart befestigt zu werden, dass das Rohrende in dem Einsatz aufgenommen ist. Hierzu umfasst der Einsatz eine an die Außenfläche des Rohrendes angepasste konische Innenfläche, an der ein Gewinde ausgebildet ist, das mit einem komplementären, an der Außenfläche des Rohrendes ausgebildeten Gewinde in Eingriff gebracht werden kann. Die Außenkontur des Einsatzes weist eine zylindrische Form auf. Die Schutzvorrichtung umfasst weiterhin ein Metallgehäuse, das in einem an dem Rohrende montierten Zustand des Einsatzes über diesen gestülpt ist.

Weiterer Stand der Technik ist aus der FR 2 991 432 A1 bekannt, die eine Verschlussvorrichtung für einen Anschluss einer Fluidleitung offenbart.

Es ist Aufgabe der vorliegenden Erfindung, eine Schutzvorrichtung für einen länglichen Hohlkörper anzugeben, der an einem Ende oder Anschluss des Hohlkörpers zerstörungsfrei lösbar befestigbar ist und baulich und/oder funktionell gegenüber den bekannten Lösungen verbessert ist.
Diese Aufgaben werden gelöst durch eine Schutzvorrichtung gemäß den Merkmalen des Patentanspruchs 1 sowie ein Verfahren zum Anbringen einer solchen Schutzvorrichtung gemäß den Merkmalen des Patentanspruchs 7. Vorteilhafte Ausgestaltungen ergeben sich aus den abhängigen Patentansprüchen.
Es wird eine Schutzvorrichtung für einen länglichen Hohlkörper vorgeschlagen, die dazu vorgesehen ist, an einem Endabschnitt des Hohlkörpers zerstörungsfrei lösbar befestigt zu werden. Bei dem länglichen Hohlkörper handelt es sich insbesondere um ein zylindrisches Rohr, das zumindest ein offenes Rohrende aufweist. Die Schutzvorrichtung umfasst eine erste Halbschale und eine zweite Halbschale. Diese weisen jeweils eine Innenkontur auf, die zusammen an die Außengestalt eines, insbesondere in axialer Richtung des Hohlkörpers verlaufenden, Endabschnitts des Hohlkörpers angepasst ist und welche, wenn diese seitlich an den Endabschnitt angelegt sind, bündig aneinandergrenzen und dabei den Endabschnitt des Hohlkörpers umfangsseitig umschließen. Der Endabschnitt kann ein, in Axialrichtung des Hohlkörpers verlaufendes, offenes Ende des Hohlkörpers oder auch ein (sich außerhalb der Axialrichtung erstreckender) Hohlkörperanschluss, wie z.B. ein Rohranschluss, sein. Die Schutzvorrichtung umfasst ferner eine Kappe, die, wenn die erste und die zweite Halbschale den Endabschnitt des Hohlkörpers umschließen, in axialer Richtung des Endabschnitts des Hohlkörpers über die erste und die zweite Halbschale schiebbar ist, siehe Anspruch 1. Mittels einer erfindungsgemäßen Schutzvorrichtung können ein Hohlkörperende und/oder ein Hohlkörperanschluss und deren jeweilige Kanten vor mechanischen Einwirkungen und Verschmutzung geschützt werden. Die Schutzvorrichtung vermeidet dabei ein Quetschen des Querschnitts des Hohlkörpers beim Anbringen der Schutzvorrichtung. Der Aufbau der Schutzvorrichtung stellt sicher, dass kein Abrieb des Materials des Hohlkörpers entsteht, wodurch keine Partikel generiert werden, welche nachteilig für einen nachfolgenden Verarbeitungsprozess wären.
Die Schutzvorrichtung lässt sich, da diese aus lediglich drei Teilen besteht, auf einfache und kostengünstige Weise herstellen. Ferner ist diese zerstörungsfrei lösbar, so dass diese - nach entsprechender Prüfung auf Verunreinigungen und mechanische Beschädigung - jederzeit wiederverwendet werden kann.

Die erste und die zweite Halbschale weisen jeweils gemäß der Erfindung ein erstes Ende und ein zweites Ende auf, wobei die erste und die zweite Halbschale dazu vorgesehen sind, mit ihrem jeweiligen ersten Ende an das freie Ende des Hohlkörpers anzugrenzen. Gemäß einer zweckmäßigen Ausgestaltung weist die jeweilige Innenkontur der ersten und der zweiten Halbschale einen von dem ersten Ende der betreffenden Halbschale ausgehenden Rücksprung auf, wodurch das freie Ende des Hohlkörpers, wenn die erste und die zweite Halbschale den Endabschnitt des Hohlkörpers umschließen, keinen Materialkontakt zu der ersten und der zweiten Halbschale hat. Hieraus ergibt sich der Vorteil, dass die Kante des Hohlkörperanschlusses oder Hohlkörperendes in keinem mechanischen Kontakt zur Schutzvorrichtung steht. Dadurch kann die empfindliche Kante weder beschädigt werden noch können Partikel abgerieben werden. Reinigungsprozesse, wie diese bei den aus dem Stand der Technik bekannten Schutzvorrichtungen erforderlich sind, sind dadurch ebenfalls entbehrlich.

Die erste und die zweite Halbschale weisen gemäß der Erfindung, wenn diese seitlich auf den Endabschnitt des Hohlkörpers angelegt sind und, insbesondere in axialer Richtung, bündig aneinandergrenzen und dabei den Endabschnitt des Hohlkörpers umfangsseitig umschließen, eine konische Außenkontur auf. Der Außendurchmesser ist dabei an den ersten Enden der zusammengefügten Halbschalen kleiner als der Außendurchmessen an den zweiten Enden der Halbschalen.

Die Kappe ist gemäß der Erfindung eine Klemmkappe, deren Innenkontur konisch ist. Dies bedeutet, ein öffnungsseitiger Durchmesser einer Ausnehmung ist größer als der von der Ausnehmungsöffnung abgewandte Durchmesser.
Gemäß einer weiteren zweckmäßigen Ausgestaltung ist die Kappe, wenn diese über die erste und die zweite Halbschale geschoben ist, kraftschlüssig mit der ersten und der zweiten Halbschale verbunden. Wird die Kappe vom freien Ende des Hohlkörpers her auf die beiden aneinandergrenzenden Halbschalen geschoben, so entsteht aufgrund der konischen Außenform der Halbschalen und der konischen Innenform der Kappe eine sichere mechanische Verbindung. Dadurch lässt sich ein einfacher, auf Kraftschluss basierender, "Verbindungsmechanismus" zwischen der Kappe und den Halbschalen realisieren. Die von der Kappe auf die Halbschalen aufgebrachte Klemmkraft ist dabei ausreichend, um sicherzustellen, dass sich die Halbschalen nicht in axialer Richtung an dem Hohlkörper verschieben können. Andererseits ist die Klemmkraft nicht derart groß, dass eine mechanische Verformung des Hohlkörpers zu befürchten ist.

Eine weitere zweckmäßige Ausgestaltung sieht vor, dass die Kappe, wenn diese über die erste und die zweite Halbschale geschoben ist, die erste und die zweite Halbschale nur teilweise umgibt. Hierdurch wird die Handhabung beim Aufbringen und Abziehen der Kappe erleichtert. Zudem kann die Klemmkraft variiert werden.

Gemäß einer weiteren zweckmäßigen Ausgestaltung weisen die erste Halbschale und die zweite Halbschale jeweils an ihrem oder im Bereich eines zweiten Endes eine Nase auf, wobei die Nasen, wenn die erste Halbschale und die zweite Halbschale seitlich auf dem Endabschnitt des Hohlkörpers angelegt sind und, insbesondere in axialer Richtung des Endabschnitts, bündig aneinandergrenzen und dabei den Endabschnitt des Hohlkörpers umfangseitig umschließen, in Umfangsrichtung gegenüberliegend angeordnet sind. Anhand der Nasen ist ein einfaches Ablösen einer jeweiligen Halbschale von dem Hohlkörper möglich, nachdem die Kappe von den beiden Halbschalen durch eine in axialer Richtung des Endabschnitts erfolgte Verschiebung gelöst wurde. Durch die Nase kann eine jeweilige Halbschale seitlich von dem Hohlkörper gedrückt werden. Dadurch ist die Gefahr einer axialen Verschiebung einer jeweiligen Halbschale beim Ablösen von dem Hohlkörper vermindert, was zu unerwünschtem Partikelabrieb führen kann.

Eine weitere zweckmäßige Ausgestaltung sieht vor, dass die erste Halbschale, die zweite Halbschale und die Kappe aus einem hochmolekularen termoplastischen Kunststoff, insbesondere Delrin, oder einem amorphen termoplastischen Kunststoff, insbesondere PVC, bestehen. Aufgrund des geringen Gewichts der aus Kunststoff realisierten Schutzvorrichtung treten keine erhöhten Belastungen und Schwingungen aufgrund von Transport-Vibrationen oder der Handhabung des geschützten Bauteils auf. Darüber hinaus lassen sich aus Kunststoff bestehende Bauteile einfach reinigen und sind wieder verwertbar. Die Komponenten der Schutzvorrichtung lassen sich durch Spritzguss günstig herstellen. In Verbindung mit der Reinigung und einer Wiederverwendung werden dadurch Prozesskosten gesenkt.
Die Herstellung der Komponenten der Schutzvorrichtung aus Kunststoff ermöglicht auch, diese in unterschiedlichen Farben bereitzustellen. Hierdurch können Signalwirkungen erzeugt und genutzt werden, um beispielsweise unterschiedliche Fertigungsstati anzuzeigen. Beispielsweise kann eine Farbe für eine Rohrendbearbeitung und eine andere Farbe für eine Endreinigung und dergleichen genutzt werden.
Dadurch, dass die Kappe an ihrem von den Halbschalen abgewandtem Ende keine Öffnung aufweist, ist das Innere des Hohlkörpers vor dem Eindringen von Schmutz geschützt. Insbesondere kann dadurch auf Reinigungsvorgänge nach dem Entfernen der Schutzvorrichtung verzichtet werden.

Die Erfindung schafft ferner ein Verfahren zum Anbringen einer solchen Schutzvorrichtung der oben beschriebenen Art an einem länglichen Hohlkörper, insbesondere einem zylindrischen Rohr, siehe Anspruch 7. Bei diesem wird die erste Halbschale seitlich auf den Endabschnitt des Hohlkörpers angelegt, so dass das erste Ende der ersten Halbschale und das freie Ende des Endabschnitts bzw. Hohlkörpers in einer gemeinsamen Ebene liegen, welche orthogonal zu einer Längsachse des Hohlkörpers ist. In einem nächsten Schritt wird die zweite Halbschale seitlich auf den Endabschnitt des Hohlkörpers angelegt, so dass das erste Ende der ersten Halbschale und das freie Ende des Endabschnitts bzw. Hohlkörpers in der gemeinsamen Ebene liegen und die erste und die zweite Halbschale bündig aneinandergrenzen und dabei den Endabschnitt des Hohlkörpers umfangsseitig umschließen. In einem nächsten Schritt wird die Kappe von dem freien Ende des Endabschnitts bzw. Hohlkörpers her auf die erste und die zweite Halbschale geschoben bis eine kraftschlüssige Verbindung entsteht. Diese entsteht aufgrund der konischen Außenform der Halbschale und der konischen Innenform der Kappe.

Das erfindungsgemäße Verfahren weist die gleichen Vorteile auf, wie diese vorstehend in Verbindung mit der erfindungsgemäßen Schutzvorrichtung erläutert wurden.

Die Erfindung wird nachfolgend näher anhand eines Ausführungsbeispiels in der Zeichnung erläutert. Es zeigen:
- Fig. 1a bis Fig. 1c: verschiedene Darstellungen einer Halbschale einer erfindungsgemäßen Schutzvorrichtung;
- Fig. 2a bis Fig. 2c: verschiedene Darstellungen einer Kappe einer erfindungsgemäßen Schutzvorrichtung; und
- Fig. 3a bis Fig. 3c: verschiedene Darstellungen einer fertig an einem länglichen Hohlkörper montierten Schutzvorrichtung.

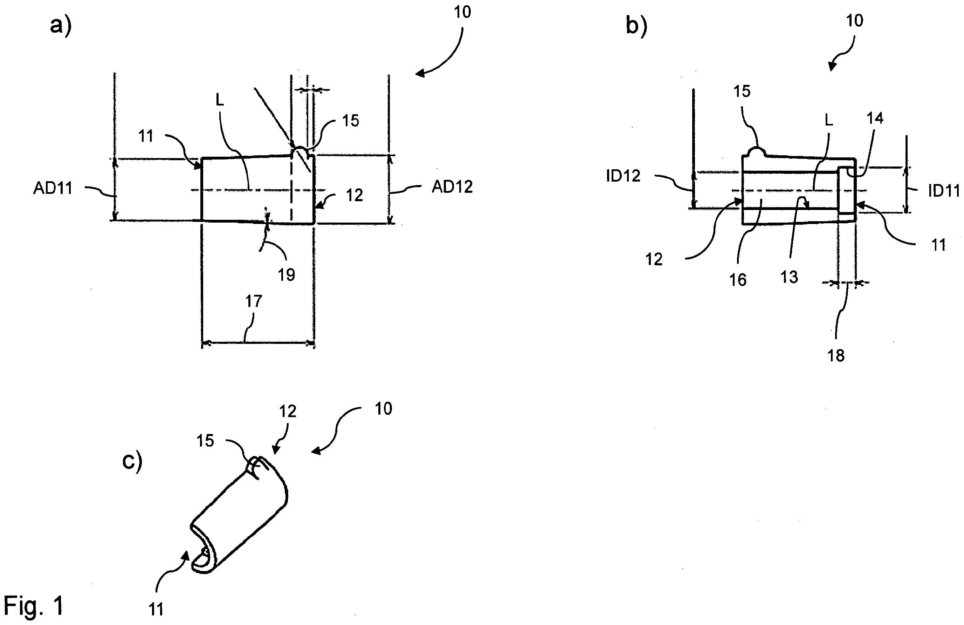

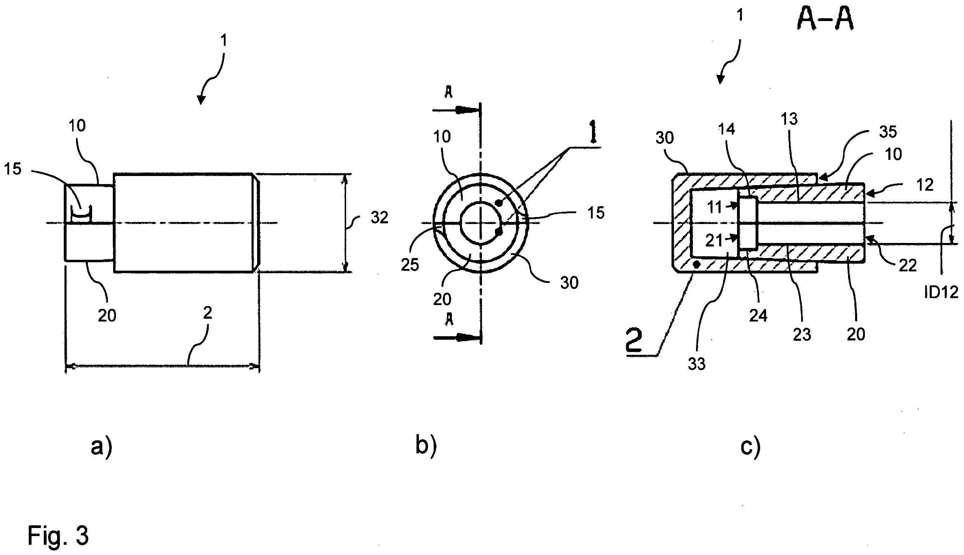

Die Fig. 1a bis Fig. 1c zeigen eine Halbschale 10 einer erfindungsgemäßen Schutzvorrichtung 1 (in Fig. 3a bis Fig. 3c dargestellt) in einer Seitenansicht von außen (Fig. 1a), in einer Seitenansicht von innen (Fig. 1b) sowie in einer perspektivischen Darstellung (Fig. 1c). Neben der in Fig. 1 dargestellten ersten Halbschale 10 umfasst die erfindungsgemäße Schutzvorrichtung 1 eine weitere, zweite Halbschale, welche identisch wie die erste Halbschale 10 aufgebaut ist und daher nicht explizit dargestellt ist. Die erste und die zweite Halbschale 10, 20 der erfindungsgemäßen Schutzvorrichtung stellen damit gleiche Bauteile dar.

Die erste und die zweite Halbschale 10, 20, ebenso wie eine nachfolgend beschriebene Kappe 30, bestehen aus einem hochmolekularen plastischen Kunststoff, insbesondere Delrin, oder einem amorphen termoplastischen Kunststoff, insbesondere PVC. Die erste und die zweite Halbschale 10, 20 sowie die Kappe 30 können beispielsweise durch Spritzguss hergestellt sein. Die drei Komponenten der Schutzvorrichtung 1 sind zweckmäßigerweise in der gleichen Farbe hergestellt.
In der nachfolgenden Beschreibung wird lediglich auf Elemente der ersten Halbschale 10 Bezug genommen. Es versteht sich, dass die entsprechenden Elemente ebenfalls bei der nicht explizit dargestellten Halbschale 20 vorgesehen sind.
Die erste Halbschale 10 umfasst ein erstes Ende 11 und ein zweites Ende 12. Ein Außendurchmesser AD11 des ersten Endes 11 ist dabei geringfügig kleiner als ein Außendurchmesser AD12 des zweiten Endes 12 der ersten Halbschale 10. Hierdurch ergibt sich gemäß der Erfindung eine konische Außenkontur. Bezüglich einer Längsachse L ergibt sich aus der Differenz des Außendurchmessers AD11 am ersten Ende 11 und dem Außendurchmesser AD12 am zweiten Ende 12 ein Winkel 19, der beispielsweise etwa 2° beträgt. Er kann auch größer oder kleiner sein.
Benachbart zu dem zweiten Ende 12 weist die erste Halbschale 10 eine Nase 15 auf, welche zur erleichterten Handhabung der ersten Halbschale 10 beim Entfernen von einem nicht näher dargestellten, hier zylindrischen, Hohlkörper, wie z.B. einem Rohr oder einem Rohranschluss, dient. Die axiale Länge der ersten Halbschale 10 ist mit dem Bezugszeichen 17 gekennzeichnet. Die axiale Länge 17 entspricht der Länge eines Endabschnitts (Rohrende oder Rohranschluss) des zu schützenden Hohlkörpers, wobei das zweite Ende 12 der ersten Halbschale 10 und das freie Ende des Hohlkörpers in einer gemeinsamen Ebene liegen. Diese Ebene erstreckt sich orthogonal zu der Längsachse L der ersten Halbschale 10. Die Längsachse L der ersten Halbschale 10 entspricht dabei der Längsachse des Endabschnitts des Hohlkörpers.
Fig. 1c zeigt, dass die erste Halbschale 10 kein rotationssymmetrisches Bauteil ist, sondern erst im zusammengefügten Zustand mit der zweiten Halbschale eine im Wesentlichen rotationssymmetrische Gestalt aufweist. Die in Axialrichtung bzw. in Richtung der Längsachse L verlaufenden Kanten der ersten Halbschale 10 liegen dabei in einer Ebene, welche durch die Längsachse L hindurchgeht.

Aus Fig. 1b ist ersichtlich, dass die erste Halbschale 10 eine Aushöhlung in Gestalt einer gestuften Bohrung aufweist. Ausgehend vom zweiten Ende 12 weist die Aushöhung 16 einen Innendurchmesser ID12 auf, der benachbart zu dem ersten Ende 11 sich sprunghaft, oder alternativ allmählich, bis auf einen größeren Innendurchmesser ID11 des ersten Endes11 erweitert. Der Bereich mit vergrößertem Innendurchmesser ID11 stellt einen Rücksprung 14 dar. Dieser weist, ausgehend von dem ersten Ende 11, eine Länge 18 auf. Die Innenkontur 13 der Aushöhlung 16 entspricht dabei der Außengestalt des in Richtung der Längsachse verlaufenden Endabschnitts des Hohlkörpers. Die Innenkontur 13 ist bei einem zylindrischen Endabschnitt ebenfalls zylinderförmig.

Da das erste Ende 11 der ersten Halbschale 10, wie erläutert, in einer Ebene mit dem freien Ende des Hohlkörpers oder eines Hohlkörperanschlusses zum Liegen kommt, stehen die Kanten des freien Endes des Hohlkörpers oder Hohlkörperanschlusses in keinem mechanischen Kontakt zu der ersten Halbschale 10 - weder während des Anbringens oder Entfernens noch während die Schutzvorrichtung 1 an dem Hohlkörper montiert ist.

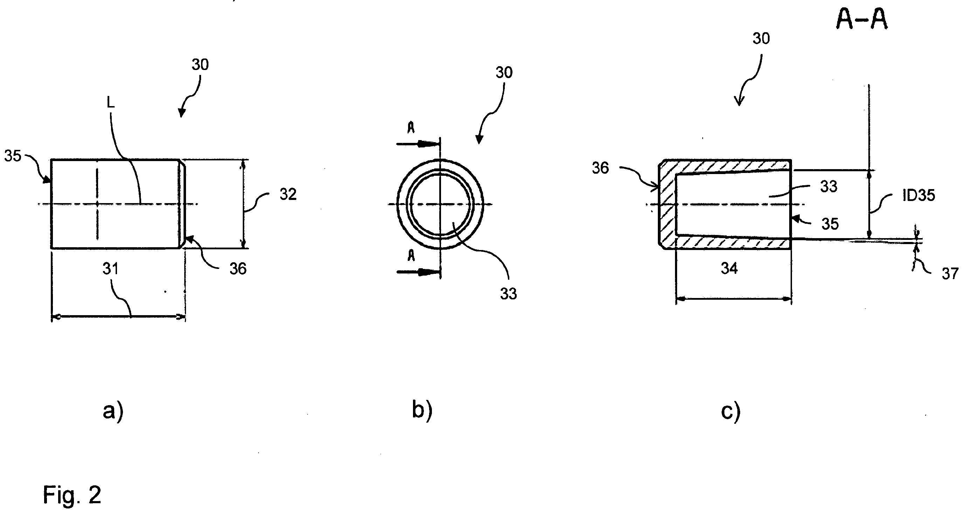

Zum Anbringen der Schutzvorrichtung werden die erste und die zweite Halbschale 10, 20 seitlich an einem freien Ende des Hohlkörpers (nicht dargestellt) angelegt. Wenn die erste und die zweite Halbschale 10, 20 seitlich auf den Endabschnitt des Hohlkörpers angelegt sind, grenzen diese in axialer Richtung bündig aneinander und umschließen des Endabschnitt des Hohlkörpers umfangsseitig vollständig. Der Freischnitt, der durch den Rücksprung 14 der Innenkontur 13 der Halbschalen 10, 20 gebildet ist, befindet sich somit auf der Höhe der, insbesondere scharfkantigen, Kante des Hohlkörpers. Selbst wenn, was zu vermeiden ist, ein leichtes Verrutschen der Halbschalen 10, 20 beim Anbringen, Abnehmen oder später während des Transports oder der Handhabung erfolgt, werden keine Partikel durch Abschaben im Bereich der Kante generiert, da die Halbschalen zu der Kante keinen Kontakt aufweisen.
Aus der vorstehenden Beschreibung versteht es sich, dass der längliche Hohlkörper über eine Länge, die der axialen Länge 17 der ersten und zweiten Halbschale 10, 20 entspricht, geschützt ist.
Die Schutzvorrichtung 1 umfasst ferner eine in den Fig. 2a bis Fig. 2c dargestellte Kappe 30 in Gestalt gemäß der Erfindung einer Klemmkappe. Fig. 2a zeigt die Kappe 30 in einer Draufsicht, Fig. 2b in einer Ansicht von vorne und Fig. 2c einen Schnitt längs der Linie A-A gemäß der Darstellung in Fig. 2b. Die Kappe 30 ist bezüglich ihrer Längsachse L als rotationssymmetrisches Bauteil ausgebildet und besteht, wie bereits beschrieben, aus einem Kunststoff. Die Kappe 30 weist eine axiale Länge 31 und einen Außendurchmesser 32 auf. Die Längsachse L der Kappe 30 stimmt mit der Längsachse L der ersten und zweiten Halbschale 10, 20 überein, wenn die drei Komponenten miteinander verbunden sind. Während die Kappe 30 an ihrem zweiten Ende 36 verschlossen ist, weist die Kappe 30 an ihrem ersten Ende 35 eine Ausnehmung 33 (vergl. Fig. 2b) auf.
Wie am besten aus der Schnittdarstellung der Fig. 2c ersichtlich ist, ist die Innenkontur der Ausnehmung 33 gemäß der Erfindung konisch. Dabei ist der öffnungsseitige Durchmesser ID35 am ersten Ende 35 der Ausnehmung 33 größer als der Innendurchmesser am Boden bzw. dem zweiten Ende 36. Der zwischen dem Innendurchmesser ID35 der Ausnehmung 33 und dem Innendurchmesser am Boden der Ausnehmung gebildete Winkel ist mit 37 bezeichnet. Der Winkel 37 entspricht vorzugsweise dem Winkel 19 der Außenkontur der ersten und zweiten Halbschalen 10, 20. Beispielsweise kann dieser ebenfalls 2° betragen. Die Länge der Ausnehmung 33 ist mit dem Bezugszeichen 34 versehen.
Die Kappe 30 wird, wie dies in den Fig. 3a bis Fig. 3c dargestellt ist, auf die konische Außenform der ersten und zweiten Halbschale in axialer Richtung, d.h. in Richtung der Längsachse L, geschoben, nachdem die erste und zweite Halbschale 10, 20 zuvor seitlich an dem zu schützenden Hohlkörper angelegt wurden. Aufgrund der konischen Außenkontur der Halbschalen 10, 20 und dem Innenkonus der Ausnehmung 33 wird eine senkrecht zur Längsrichtung erzeugte Klemmkraft, d.h. radial wirkende Klemmkraft, erzeugt, welche die Halbschalen zuverlässig auf der Oberfläche des Hohlkörperendes oder Hohlkörperanschlusses fixiert. Fig. 3c zeigt die über die Halbschalen 10, 20 geschobene Kappe von deren ersten Enden 11,21.

Wird der Innendurchmesser ID35 der Ausnehmung 33 größer als der Außendurchmesser AD11 der ersten und zweiten Halbschale 10, 20 und gleichzeitig kleiner als der Außendurchmesser AD12 der ersten und zweiten Halbschale 10, 20 gewählt, so kommt das erste Ende 35 der Kappe 30 beabstandet von dem zweiten Ende 12 der Halbschalen 10, 20 zum Liegen.

Sobald die Schutzvorrichtung 1 auf das Hohlkörperende oder den Hohlkörperanschluss aufgebracht ist, ist nicht nur dessen freies Ende und insbesondere dessen endseitige Kante vor mechanischer Beschädigung geschützt, sondern auch das Eindringen von Schmutzpartikeln ins Innere des Hohlkörpers wird zuverlässig vermieden. Dies ist insbesondere dann von Bedeutung, wenn das Ende des Hohlkörpers in einem nachfolgenden Bearbeitungsschritt verschweißt werden soll. Das bestimmungsgemäße Anlegen und Entfernen der Schutzvorrichtung stellt sicher, dass kein weitergehender Reinigungsschritt erforderlich ist.

Zum Entfernen der Schutzvorrichtung von dem Hohlkörper wird die Kappe 30 in axialer Richtung, von den Halbschalen 10, 20 entfernt. Dabei kann es zweckmäßig sein, die erste und die zweite Halbschale im Bereich der zweiten Enden 12, 22 zu halten. Durch einen seitlichen Druck an einer jeweiligen Nase 15 und 25 können die Halbschalen 10, 20 von dem Hohlkörper entfernt werden und nach einer Kontrolle und ggf. Reinigung wieder verwendet werden.

Neben einem sicheren Schutz vor mechanischen Einwirkungen auf das Ende des Hohlkörpers und die Kante am Ende des Hohlkörpers schützt die Schutzvorrichtung zuverlässig vor Partikeln und vermeidet das Freisetzen von eigenen Partikeln, zusätzlich unterstützt durch die Geometrie (den Rücksprung der Innenkontur). Die Schutzvorrichtung hat gute mechanische Eigenschaften, um formschlüssig an dem zu schützenden Hohlkörper anzuliegen und diesen nicht zu stark, aber auch nicht zu schwach zu klemmen. Auftretende Kräfte werden gleichmäßig auf den Umfang des Hohlkörpers verteilt. Aufgrund seines Materials wird Schmutz nicht oder nur geringfügig aufgrund statischer Aufladung angezogen.

### BEZUGSZEICHENLISTE

- 1: Schutzvorrichtung
- 2: Länge der zusammengesetzten Schutzvorrichtung im Einsatz
- 10: erste Halbschale
- 11: erstes Ende der ersten Halbschale
- 12: zweites Ende der ersten Halbschale
- 13: Innenkontur der ersten Halbschale
- 14: Rücksprung in der Innenkontur der ersten Halbschale
- 15: Nase
- 16: Aushöhlung
- 17: Länge der ersten Halbschale
- 18: Länge des Rücksprungs
- 19: Winkel
- 20: zweite Halbschale
- 21: erstes Ende der zweiten Halbschale
- 22: zweites Ende der zweiten Halbschale
- 23: Innenkontur der zweiten Halbschale
- 24: Rücksprung in der Innenkontur der zweiten Halbschale
- 25: Nase
- 30: Kappe, insbesondere Klemmkappe
- 31: Länge der Kappe
- 32: Außendurchmesser der Kappe
- 33: Ausnehmung
- 34: Länge der Ausnehmung 33
- 35: erstes Ende der Kappe
- 36: zweites Ende der Kappe
- 37: Winkel

- AD11: Außendurchmesser des ersten Endes 11 der ersten Halbschale 10
- AD12: Außendurchmesser des zweiten Endes 12 der ersten Halbschale 10
- ID11: Innendurchmesser der Aushöhlung 16 am ersten Ende 11 der ersten Halbschale 10
- ID12: Innendurchmesser der Aushöhlung 16 am zweiten Ende 12 der ersten Halbschale 10
- ID35: Innendurchmesser der Ausnehmung 33 der Kappe 30

## Patentansprüche

1. Schutzvorrichtung für einen länglichen Hohlkörper, insbesondere ein zylindrisches Rohr, die dazu vorgesehen ist, an einem Endabschnitt des Hohlkörpers zerstörungsfrei lösbar befestigt zu werden, wobei die Schutzvorrichtung (1)
- eine erste Halbschale (10) und eine zweite Halbschale (20) umfasst, welche jeweils eine Innenkontur (13, 23) aufweisen, die zusammen an eine Außengestalt des, insbesondere in axialer Richtung des Hohlkörpers verlaufenden, Endabschnitts des Hohlkörpers angepasst ist, und welche, wenn diese seitlich auf den Endabschnitt angelegt sind, bündig aneinandergrenzen und dabei den Endabschnitt des Hohlkörpers umfangsseitig umschließen, wobei die erste und die zweite Halbschale (10, 20) jeweils ein erstes Ende (11, 21) und ein zweites Ende (12, 22) aufweisen und dazu vorgesehen sind, mit ihrem jeweiligen ersten Ende (11, 21) an ein freies Ende des Hohlkörpers anzugrenzen;
- eine Kappe (30) mit einer eine Innenkontur aufweisenden Ausnehmung (33) umfasst, die, wenn die erste und die zweite Halbschale (10, 20) den Endabschnitt des Hohlkörpers umschließen, in axialer Richtung des Endabschnitts des Hohlkörpers über die erste und die zweite Halbschale (10,20) schiebbar ist,
**dadurch gekennzeichnet, dass**
- die erste und die zweite Halbschale (10, 20), wenn diese seitlich auf den Endabschnitt des Hohlkörpers angelegt sind und, insbesondere in axialer Richtung, bündig aneinandergrenzen und dabei den Endabschnitt des Hohlkörpers umfangsseitig umschließen, eine konische Außenkontur aufweisen, wobei ein Außendurchmesser an den ersten Enden (11, 21) der zusammengefügten Halbschalen (10, 20) kleiner ist als ein Außendurchmesser an den zweiten Enden der Halbschalen (10, 20), und
- die Kappe (30) eine Klemmkappe ist, deren Innenkontur konisch ist.

2. Schutzvorrichtung nach Anspruch 1, bei der die jeweilige Innenkontur (13, 23) der ersten und der zweiten Halbschale (10, 20) einen von dem ersten Ende (11, 21) der betreffenden Halbschale (10, 20) ausgehenden Rücksprung (14, 24) aufweist, wodurch das freie Ende des Hohlkörpers,
wenn die erste und die zweite Halbschale (10, 20) den Endabschnitt des Hohlkörpers umschließen, keinen Materialkontakt zu der ersten und der zweiten Halbschale (10, 20) hat.

3. Schutzvorrichtung nach einem der vorhergehenden Ansprüche, bei der die Kappe (30), wenn diese über die erste und die zweite Halbschale (10, 20) geschoben ist, kraftschlüssig mit der ersten und der zweiten Halbschale (10, 20) verbunden ist.

4. Schutzvorrichtung nach einem der vorhergehenden Ansprüche, bei der die Kappe (30), wenn diese über die erste und die zweite Halbschale (10, 20) geschoben ist, die erste und die zweite Halbschale (10, 20) nur teilweise umgibt.

5. Schutzvorrichtung nach einem der vorhergehenden Ansprüche, bei der die erste Halbschale (10) und die zweite Halbschale (20) jeweils an ihrem oder im Bereich ihres zweiten Endes (20) eine Nase (15, 25) aufweisen, wobei die Nasen (15, 25), wenn die erste Halbschale (10) und die zweite Halbschale (20) seitlich auf den Endabschnitt des Hohlkörpers angelegt sind und, insbesondere in axialer Richtung, bündig aneinandergrenzen und dabei den Endabschnitt des Hohlkörpers umfangsseitig umschließen, in Umfangsrichtung gegenüberliegend angeordnet sind.

6. Schutzvorrichtung nach einem der vorhergehenden Ansprüche, bei der die erste Halbschale (10), die zweite Halbschale (20) und die Kappe (30) aus einem hochmolekularen thermoplastischen Kunststoff, insbesondere Delrin, oder einem amorphen thermoplastischen Kunststoff, insbesondere PVC, bestehen.

7. Verfahren zum Anbringen einer Schutzvorrichtung gemäß einem der vorhergehenden Ansprüche an einem länglichen Hohlkörper, insbesondere einem zylindrischen Rohr, bei dem
a) die erste Halbschale (10) seitlich auf den Endabschnitt des Hohlkörpers angelegt wird, so dass das erste Ende (11) der ersten Halbschale und das freie Ende des Hohlkörpers in einer gemeinsamen Ebene liegen, welche orthogonal zu einer Längsachse des Hohlkörpers ist;
b) die zweite Halbschale (20) seitlich auf den Endabschnitt des Hohlkörpers angelegt wird, so dass das erste Ende (11) der ersten Halbschale und das freie Ende des Hohlkörpers in der gemeinsamen Ebene liegen und die erste und die zweite Halbschale (10, 20) bündig aneinandergrenzen und dabei den Endabschnitt des Hohlkörpers umfangsseitig umschließen;
c) die Kappe (30) von dem freien Ende des Hohlkörpers her auf die erste und die zweite Halbschale (10, 20) geschoben wird bis aufgrund der konischen Außenform der Halbschalen (10, 20) und der konischen Innenform der Kappe (30) eine kraftschlüssige Verbindung entsteht.

## Claims

1. A protective device for an elongated hollow body, in particular a cylindrical tube, the protective device being provided for being nondestructively, detachably fastened to an end section of the hollow body, wherein the protective device (1) comprises
- a first half-shell (10) and a second half-shell (20), each having an inner contour (13, 23) which together are adapted to an outer shape of the end section of the hollow body, the end section extending in particular in the axial direction of the hollow body, and which, when the first and the second half-shell are placed laterally on the end section, abut one another in flush alignment and thereby circumferentially enclose the end section of the hollow body, the first and the second half-shell (10, 20) having a respective first end (11, 21) and a second end (12, 22) and being provided for abutting against a free end of the hollow body with their respective first end (11, 21);
- a cap (30) having a recess (33) with an inner contour, the cap being movable across the first and the second half-shell (10, 20) in the axial direction of the end section of the hollow body when the first and the second half-shell (10, 20) enclose the section of the hollow body,
**characterized in that**
- the first and the second half-shell (10, 20), when they are placed laterally on the end section of the hollow body and abut one another in flush alignment, in particular in the axial direction, and thereby circumferentially enclose the end section of the hollow body, have a conical outer contour, an outer diameter at the first ends (11, 21) of the assembled half-shells (10, 20) being smaller than an outer diameter at the second ends of the half-shells (10, 20), and
- the cap (30) is a clamping cap having a conical inner contour.

2. The protective device according to Claim 1, in which the respective inner contour (13, 23) of the first and the second half-shell (10, 20) has an offset (14, 24) that starts from the first end (11, 21) of the half-shell (10, 20) in question, as the result of which the free end of the hollow body has no material contact with the first and the second half-shell (10, 20) when the first and the second half-shell (10, 20) enclose the end section of the hollow body.

3. The protective device according to one of the preceding claims, in which the cap (30) is connected to the first and the second half-shell (10, 20) in a force-fit manner when the cap is moved across the first and the second half-shell (10, 20).

4. The protective device according to one of the preceding claims, in which the cap (30) only partially surrounds the first and the second half-shell (10, 20) when it is moved across the first and the second half-shell (10, 20).

5. The protective device according to one of the preceding claims, in which the first half-shell (10) and the second half-shell (20) each have a tab (15, 25) on or in the area of their second end (20), wherein when the first half-shell (10) and the second half-shell (20) are placed laterally on the end section of the hollow body and abut one another in flush alignment, in particular in the axial direction, and thereby circumferentially enclose the end section of the hollow body, the tabs (15, 25) are situated opposite one another in the circumferential direction.

6. The protective device according to one of the preceding claims, in which the first half-shell (10), the second half-shell (20), and the cap (30) are made of a highmolecular thermoplastic plastic, in particular Delrin, or an amorphous thermoplastic plastic, in particular PVC.

7. A method for mounting a protective device according to one of the preceding claims on an elongated hollow body, in particular a cylindrical tube, in which
a) the first half-shell (10) is placed laterally on the end section of the hollow body, so that the first end (11) of the first half-shell and the free end of the hollow body lie in a shared plane that is orthogonal to a longitudinal axis of the hollow body;
b) the second half-shell (20) is placed laterally on the end section of the hollow body, so that the first end (11) of the first half-shell and the free end of the hollow body lie in the shared plane and the first and the second half-shell (10, 20) abut one another in flush alignment, thereby circumferentially enclosing the end section of the hollow body;
c) the cap (30) is moved from the free end of the hollow body to the first and the second half-shell (10, 20) until a force-fit connection results due to the conical outer shape of the half-shells (10, 20) and the conical inner shape of the cap (30).

## Revendications

1. Dispositif de protection pour un corps creux allongé, en particulier un tube cylindrique, prévu pour être fixé à une partie d'extrémité du corps creux de manière amovible et non-destructive, dans lequel le dispositif de protection (1)
- comprend une première demi-coque (10) et une deuxième demi-coque (20) présentant respectivement un contour intérieur (13, 23), adapté ensemble à une conformation extérieure de la partie d'extrémité du corps creux s'étendant en particulier dans la direction axiale du corps creux, et qui sont contiguës en affleurement tout en entourant la partie d'extrémité du corps creux du côté circonférentiel lorsque celles-ci sont appliquées latéralement contre la partie d'extrémité, lesdites première et deuxième demi-coques (10, 20) présentant respectivement une première extrémité (11, 21) et une deuxième extrémité (12, 22) et étant prévues pour être contiguës par leur première extrémité respective à une extrémité libre du corps creux ;
- comprend un capuchon (30) avec un évidement (33) présentant un contour intérieur, qui, lorsque les première et deuxième demi-coques (10, 20) entourent la partie d'extrémité du corps creux, peut être glissé sur les première et deuxième demi-coques (10, 20) dans la direction axiale de la partie d'extrémité du corps creux, **caractérisé en ce que**
- les première et deuxième demi-coques (10, 20) présentent, lorsqu'elles sont appliquées latéralement contre la partie d'extrémité du corps creux, et en particulier dans la direction axiale, sont contiguës en affleurement tout en entourant la partie d'extrémité du corps creux du côté circonférentiel, un contour extérieur conique, un diamètre extérieur aux premières extrémités (11, 21) des demi-coques (10, 20) assemblées étant inférieur à un diamètre extérieur aux deuxièmes extrémités des demi-coques (10, 20), et
- le capuchon (30) est un capuchon de serrage dont le contour intérieur est conique.

2. Dispositif de protection selon la revendication 1, dans lequel le contour intérieur respectif (13, 23) des première et deuxième demi-coques (10, 20) présente un renfoncement (14, 24) partant de la première extrémité (11, 21) de ladite demi-coque (10, 20), de sorte que lorsque les première et deuxième demi-coques (10, 20) entourent la partie d'extrémité du corps creux, l'extrémité libre du corps creux ne présente aucun contact de matière avec les première et deuxième demi-coques (10, 20).

3. Dispositif de protection selon l'une quelconque des revendications précédentes, dans lequel le capuchon (30), lorsqu'il est glissé sur les première et deuxième demi-coques (10, 20), est connecté par adhérence aux première et deuxième demi-coques (10, 20).

4. Dispositif selon l'une quelconque des revendications précédentes, dans lequel le capuchon (30), lorsqu'il est glissé sur les première et deuxième demi-coques (10, 20), n'entoure que partiellement les première et deuxième demi-coques (10, 20).

5. Dispositif de protection selon l'une quelconque des revendications précédentes, dans lequel la première demi-coque (10) et la deuxième demi-coque (20) présentent respectivement à leur deuxième extrémité (20), ou à proximité de celle-ci, un nez (15, 25), lesdits nez (15, 25) étant disposés de manière opposée dans la direction circonférentielle lorsque la première demi-coque (10) et la deuxième demi-coque (20) sont appliquées latéralement contre la partie d'extrémité du corps creux et sont contiguës en affleurement, en particulier dans la direction axiale, tout en entourant la partie d'extrémité du corps creux.

6. Dispositif de protection selon l'une quelconque des revendications précédentes, dans lequel la première demi-coque (10), la deuxième demi-coque (20) et le capuchon (30) sont composés d'une matière thermoplastique de masse moléculaire élevée, en particulier de Delrin, ou d'une matière thermoplastique amorphe, en particulier de PVC.

7. Procédé d'installation d'un dispositif de protection selon l'une quelconque des revendications précédentes sur un corps creux allongé, en particulier un tube cylindrique, dans lequel
a) la première demi-coque (10) est appliquée latéralement contre la partie d'extrémité du corps creux de sorte que la première extrémité (11) de la première demi-coque et l'extrémité libre du corps creux se trouvent dans un plan commun orthogonal à un axe longitudinal du corps creux ;
b) la deuxième demi-coque (20) est appliquée latéralement contre la partie d'extrémité du corps creux de sorte que la première extrémité (11) de la première demi-coque et l'extrémité libre du corps creux se trouvent dans le plan commun, et les première et deuxième demi-coques (10, 20) sont contiguës en affleurement tout en entourant la partie d'extrémité du corps creux du côté circonférentiel ;
c) le capuchon (30) est glissé depuis l'extrémité libre du corps creux sur les première et deuxième demi-coques (10, 20) jusqu'à ce qu'une connexion par adhérence soit établie en raison de la forme extérieure conique des demi-coques (10, 20) et de la forme intérieure conique du capuchon (30).
